# EUROPEAN PATENT SPECIFICATION

(11) **EP 4 160 877 B1**
(45) Date of publication and mention of the grant of the patent: **01.07.2026**
(21) Application number: 21200793.4
(22) Date of filing: 04.10.2021
(51) Int. Cl.: H02K 3/24, H02K 5/20, H02K 9/197

(54) **ELECTRIC ROTATING MACHINE AND METHOD AND VEHICLE COMPRISING ELECTRIC MACHINE**
ELEKTRISCHE ROTIERENDE MASCHINE UND VERFAHREN UND FAHRZEUG MIT EINER ELEKTRISCHEN MASCHINE
MACHINE ÉLECTRIQUE TOURNANTE ET PROCÉDÉ ET VÉHICULE COMPRENANT UNE MACHINE ÉLECTRIQUE

(43) Date of publication of application: 05.04.2023
(73) Proprietor: Traton AB, 151 87 Södertälje (SE)
(72) Inventor: BARTOS, Elias, 141 38 Huddinge (SE); AFRIDI, Usman, 152 31 Södertälje (SE)
(74) Representative: Traton AB

(56) References cited:
- DE-A1- 102017 221 803
- JP-A- 2013 013 228
- JP-A- H07 279 975
- JP-A- H09 154 258
- US-A1- 2018 205 294
- US-A1- 2019 207 457
- US-B2- 7 952 240

## Description

### TECHNICAL FIELD

The invention relates to an electric rotating machine and to a method for cooling a coil end winding of an electric rotating machine. The invention further relates to a vehicle comprising one or more electric rotating machines.

### BACKGROUND

In general, an electric rotating machine comprises a stator and a rotor rotatable about a rotational axis in relation to the stator. At least one of the rotor and stator may be provided with one or more windings. Some electric rotating machines are equipped with a cooling system for one or more of the rotor and stator, since during operation of the electric rotating machine one or more of the rotor and stator may be heated to such a degree that cooling is advisable. The cooling system may guide a coolant such as an oil, or other fluid, in channels to cool one or more of the rotor and stator.

Known cooling systems for cooling a stator coil end winding of an electric rotating machine utilise guiding elements arranged at the end winding. Cooling of the end winding is performed by introducing a coolant at an upper portion of the end winding, wherefrom assisted by the guiding elements, gravity will feed the coolant along/through the end winding for cooling thereof.

Three examples of such cooling of stator coil end windings are disclosed in:
- EP 2461463, which relates to a refrigerant supply port through which a cooling medium is supplied to a coil end and a guide member for causing the cooling medium supplied through the refrigerant supply port to flow along the coil end.
- US 8269382, which relates to a cooling medium introducing gap formed above a portion of a coil end portion to which the cooling medium is to be supplied. The cooling medium is supplied to the coil end portion through discharge openings provided in a storage space forming member.
- And US 2011/180239, which relates to a cooling structure with a cooling medium distributing member formed with a plurality of discharge openings. The cooling medium distributing member is arranged above a stator coil end winding.

The document (d1) US2018205294A1 shows a cooling structure for an electric machine where refrigerant is splashed onto the coil ends of a stator. The cooling structure is provided with a blocking wall member of an annular shape for blocking a portion of the refrigerant. The rate at which the blocking wall member shields the coil ends against the refrigerant is high when the rotor rotates at high speed.

The document US7952240B2 shows a rotary electric machine wherein the cooling unit includes an outer periphery cooling portion disposed along an outer peripheral surface of the coil end. The cooling portion includes a plurality of injection holes that inject the coolant onto the coil end.

The document US2019207457 shows a flange for an electrical machine, the flange being configured to at least partly cover winding overhangs. The flange comprises a chamber to receive a cooling fluid, wherein the flange comprises at least one first orifice and at least one second orifice allowing cooling fluid to enter or leave the chamber.

### SUMMARY

In such prior art gravity fed cooling of a stator coil end winding, a coolant will flow along the path of least resistance along/through the coil end winding.

The inventors have realised that regions of the coil end wiring that are reached by a coolant fed by gravity through/along the coil end winding are not necessarily the warmest regions of the coil end winding. Since the warmest parts of the coil end winding determine the operating temperature of the electric machine, it has been realised by the inventors that a more precise guiding of the coolant to the warmest regions of the coil end winding will provide a more efficient cooling of the electric machine, which will provide better operating conditions for the electric rotating machine and which even may increase an available power output of the electric rotating machine.

Accordingly, it would be advantageous to improve cooling of an electric rotating machine. In particular, it would be desirable to enable an efficient cooling of a stator coil end winding of an electric rotating machine. To better address one or more of these concerns, an electric rotating machine and/or a method for cooling a coil end winding of an electric rotating machine and/or a vehicle comprising one or more electric rotating machines having the features defined in one or more of the independent claims is/are provided.

According to an aspect of the invention, there is provided an electric rotating machine, comprising a stator, a rotor arranged to rotate about a rotational axis in relation to the stator, and a cooling system for cooling at least a portion of the stator. A radial extension extends perpendicularly to the rotational axis. The stator comprises a stator core and a stator coil, the stator coil having a coil end winding extending axially beyond the stator core. At least part of the coil end winding is arranged in a channel extending at least partially around the rotational axis. The cooling system comprises the channel and at least one inlet to the channel arranged at a radially inner portion of the channel seen along the radial extension. The cooling system comprises one or more passages arranged upstream of the channel, wherein upstream the channel is before the channel seen along a flow direction of the coolant in the cooling system. The at least one inlet to the channel is fluidly connected to the one or more passages. The one or more passages is/are formed between a first guiding member and a second guiding member, wherein the first and second guiding members comprise ring-shaped wall members to form therebetween the one or more passages. The channel is partly delimited by the first guiding member. The at least one inlet to the channel is formed by one or more recesses or through holes in the first guiding member.

Since the cooling system comprises the channel extending at least partially around the rotational axis and the at least one inlet to the channel arranged at a radially inner portion of the channel, the coolant will enter the channel at a portion thereof where the coil end winding is the warmest during use of the electric rotating machine.

More specifically, the portion of the coil end winding with the highest losses is the portion closest to the air gap between the stator and the rotor. Accordingly, turns of the coil end winding closest to the air gap i.e., the radially innermost turns of the coil end winding have the highest losses and therefore, form the warmest portions of the coil end winding during use of the electric rotating machine.

Due to the invention, a precise guiding of the coolant to the warmest regions of the coil end winding provides an efficient cooling of the electric machine. Good operating conditions are thus, provided for the electric rotating machine, which also may increase an available power output of the electric rotating machine.

The electric rotating machine may form part of a propulsive system of a vehicle. The electric rotating machine may drive the vehicle and/or the electric rotating machine may form a generator for transforming kinetic energy of the vehicle into electric power to be utilised for charging a battery. Electric energy may be provided to the electric rotating machine from a battery aboard the vehicle or from a power source external of the vehicle, such as an overhead power line or a rail arranged in or at a surface travelled by the vehicle.

The electric rotating machine may herein alternatively be referred to simply as the electric machine.

The rotor of the electric machine may be directly or indirectly connected to an output shaft of the electric machine.

The stator coil has at least one winding. The at least one winding comprises a number of turns. As mentioned above, the stator coil has a coil end winding i.e., that portion of the stator winding which extends axially outside the stator core.

The coil end winding is herein also referred to as a stator coil end winding or simply, as an end winding.

The cooling system is configured for cooling at least the coil end winding during use of the electric rotating machine. The cooling system may be configured for cooling further portions of the electric rotating machine.

The cooling system is configured for guiding a coolant such as an oil, or other fluid, along and/or through the coil end winding. That is, the coolant will flow along and/or through the individual turns of the coil end winding. The cooling system may comprise further conduits, passages, paths, and the like for conducting the coolant to and from the channel.

The channel may be a space separate from a rotor compartment of the electric machine i.e., separate from a space wherein the rotor is arranged.

The channel extending at least partially around the rotational axis may extend partially of fully circumferentially around the rotational axis. The channel thus, may be a ring-shaped channel. In embodiments wherein the channel extends partially around the rotational axis, one or more further channels may be arranged extending partially around the rotational axis. Together, such channels extending partially around the rotational axis may form a ring-shaped sequence of channels.

The at least one inlet to the channel being - arranged at a radially inner portion of the channel seen along the radial extension - means that the at least one inlet extends in a radial direction from outside the channel into the channel and/or that the at least one inlet extends in an axial direction from outside the channel into the channel. In both cases, the at least one inlet is arranged at a radially inner portion of the channel seen along the radial extension. The radially inner portion may be a radially inner quarter of the channel, or a radially inner third of the channel, or a radially inner half of the channel.

An axial direction/extension extends in parallel with the rotational axis of the electric machine.

According to embodiments, the at least one inlet to the channel may be arranged at an axial half of the channel closest to the stator core. In this manner, the coolant may be directed into a portion of the channel closest to the air gap of the electric rotating machine i.e., closest to the air gap seen along the rotational axis. Thus, the coolant may be supplied to the warmest portion of the end winding, not only in a radially warmest portion of the end winding but also in an axially warmest portion of the end winding.

According to embodiments, the at least one inlet to the channel may comprise more than one inlet distributed along a circumference of the channel. In this manner, the coolant may be supplied to the end winding in more than one circumferential position of the channel. Thus, cooling of the coil end winding may be further improved.

Depending on where along the radially inner portion of the channel the more than one inlet is arranged, the inlets may be arranged along an inner circumference of the channel and/or along an axial circumference of the channel.

The cooling system comprises one or more passages arranged upstream of the channel, and the at least one inlet to the channel may be fluidly connected to the one or more passages. In this manner, the coolant may be supplied efficiently to the at least one inlet and the channel.

Herein, the terms upstream and downstream relate to the cooling system and a flow direction of the coolant therein during use of the electric rotating machine. Accordingly, upstream the channel is before the channel seen along a flow direction of the coolant in the cooling system.

According to embodiments, the cooling system may comprise at least one outlet from the channel arranged at a radially outer portion of the channel seen along the radial extension. In this manner, the coolant may be directed in a general sense from a radially inner portion of the channel towards a radially outer portion thereof. Accordingly, the coolant may flow from a warmest region of the end winding towards a coolest region thereof as it flows through the channel. Thus, cooling of the coil end winding may be further improved.

The radially outer portion may be a radially outer quarter of the channel, or a radially outer third of the channel, or a radially outer half of the channel.

According to embodiments, the coil end winding may be arranged at the radially inner portion of the channel. The channel may extend radially outside the coil end winding, forming in the channel an unblocked portion of the channel radially outside of the coil end winding seen along the radial extension. The unblocked portion may extend at least partially circumferentially around the coil end winding. In this manner, there may be provided an at least partial circumferential flow path to the outlet radially outside the end winding i.e., downstream of the coil end winding, seen in a flow direction of the coolant through the channel. Thus, coolant that has passed through the coil end winding may be readily conducted to the outlet from the channel.

According to a further aspect of the invention, there is provided a method for cooling a coil end winding of an electric rotating machine. The electric machine comprises a stator, a rotor arranged to rotate about a rotational axis in relation to the stator, and a cooling system for cooling at least the coil end winding. A radial extension extends perpendicularly to the rotational axis. The stator comprises a stator core and a stator coil, the stator coil comprising the coil end winding which extends axially beyond the stator core, wherein at least part of the coil end winding is arranged in a channel extending at least partially around the rotational axis, and wherein the cooling system comprises the channel. The cooling system comprises one or more passages arranged upstream the channel. The at least one inlet to the channel is fluidly connected to the one or more passages. The one or more passages is/are formed between a first guiding member and a second guiding member, wherein the first and second guiding members comprise ring-shaped wall members to form therebetween the one or more passages. The channel is partly delimited by the first guiding member. The at least one inlet to the channel is formed by one or more recesses or through holes in the first guiding member. The method comprises steps of:
- supplying a coolant to the channel at a radially inner portion of the channel via the at least one inlet to the channel, the inlet being fluidly connected to the one or more passages formed between a first and second guiding member, and
- directing the coolant radially outwardly through the coil end winding.

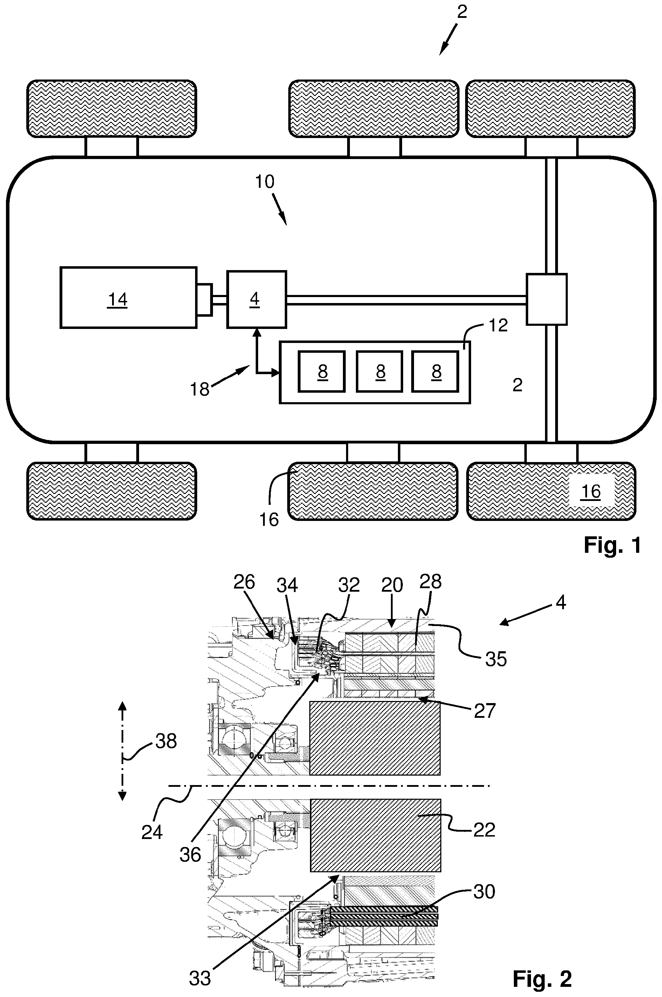

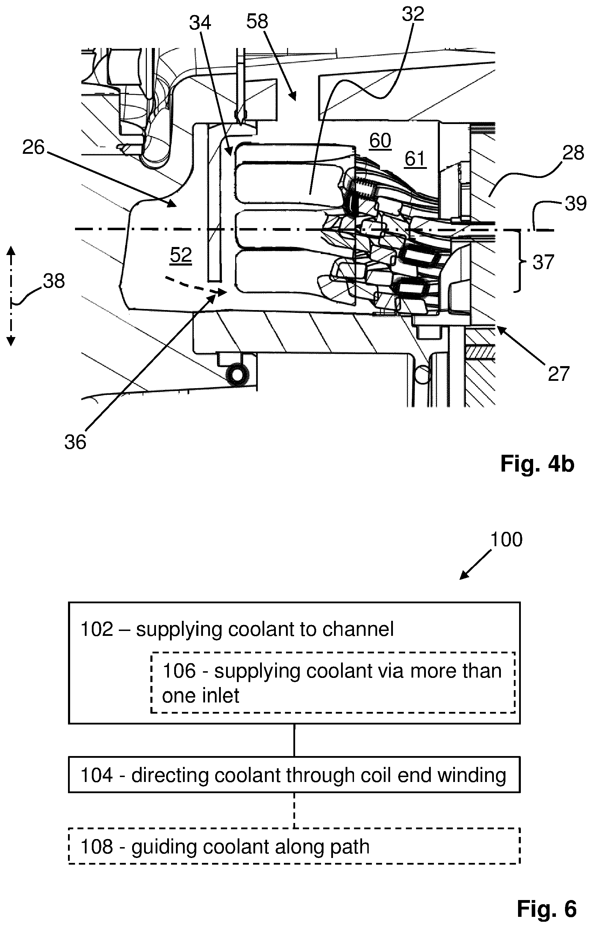

**Fig. 1** illustrates embodiments of a vehicle 2 configured for land-based propulsion. **Fig. 1** represents a schematic cross sectional top view of the vehicle 2. The vehicle 2 comprises one or more electric rotating machines 4 according to aspects and/or embodiments discussed herein, such as the electric rotating machine 4 discussed below with reference to **Figs. 2 - 5f****.** Part of the electric rotating machine 4 may be cooled in accordance with a method as discussed herein, inter alia with reference to **Fig. 6****.**

In these embodiments, the vehicle 2 is a heavy load vehicle in the form of a truck. However, the invention is not limited to any particular type of vehicle configured for land-based propulsion. The vehicle 2 may be e.g., a bus, a truck, a heavy truck, a car, or a train. The vehicle may also be of another type. The vehicle 2 may be an electric vehicle, EV, for example a hybrid vehicle or a hybrid electric vehicle, HEV, or a battery electric vehicle, BEV. It is to be noted that the herein discussed electric rotating machine may be utilised in further means of transportation, such as in boats or other marine vessels.

The one or more electric rotating machines 4 may comprise one or more electric motors and/or one or more electric generators. The one or more electric rotating machines 4 may be configured for propelling the vehicle 2. The one or more electric rotating machines 4 may be configured for charging one or more electric battery cells 8 and/or one or more electrical battery packs 12.

The vehicle 2 may comprise a powertrain 10, for example configured for one of an EV, HEV and BEV. The vehicle 2 may comprise one or more electrical battery packs 12 including two or more electric battery cells 8. The electrical battery pack 12 may be attachable to a chassis of the vehicle 2. The vehicle 2 may include further electrical and/or mechanical components e.g., a combustion engine 14 and other devices required for a vehicle 2, such as for an EV, HEV, or BEV.

The powertrain 10 and/or the one or more electric rotating machines 4 is/are configured to propel, or drive, the vehicle 2. The powertrain 10 may include the electrical battery pack 12. The one or more electric rotating machines 4 may be arranged in other positions of the vehicle 2 than shown in **Fig. 1****.** For example, in connection with one or more wheels 16 of the vehicle 2 or in connection with the combustion engine 14 to operate as an electric generator.

The vehicle 2 may comprise an electrical system 18. The electrical system 18 may be configured for direct current. The electrical system 18 may be a low voltage system such as a 24 Volt system. The electrical system 18 may be a higher voltage system configured for a high voltage such as 48 V or a voltage of 60 V or above for example, above 400 V, or above 450 V, such as above 650 V. For example, the high voltage system may be configured for a voltage up to 1500 V and/or for a voltage above 1500 V. The electric power, or the electric current, for example the direct current, of the electrical system 18 may be transferred for example, at one or more of the voltage levels mentioned above.

The electrical system 18 may be electrically connected, or connectable, to one or more electrical battery packs 12. The electrical battery packs 12 may be configured for one or more of the voltage levels mentioned above.

The electrical system 18 may be configured to electrically connect the electrical battery pack 12 to the powertrain 10 of the vehicle 2. The electrical system 18 may be configured to electrically connect the electrical battery pack 12 to the one or more electric rotating machines 4 of the vehicle 2. The vehicle electrical system 18 may be configured to transfer electric power, or electric current, e.g., between the one or more electric rotating machines 4 and/or the powertrain 10 and/or the electrical battery pack 12.

Alternatively, the electrical system 18 may be configured for alternating current. A further option may be for the electrical system 18 to be configured in part for direct current and in part for alternating current.

According to some embodiments, the electrical system 18 may be fed from an electrical power source external of the vehicle 2, such as an overhead power line or a powered rail arranged in, or at, a travelling surface.

**Fig. 2** illustrates a cross section through a portion of an electric rotating machine 4 according to embodiments. The electric rotating machine 4 may form part of a vehicle, such as a vehicle 2 discussed above with reference to **Fig. 1****.**

The electric rotating machine 4 may be operated as an electric motor e.g., for propelling a vehicle and/or as an electric generator e.g., for charging one or more electric battery cells and/or one or more electrical battery packs.

The electric rotating machine 4 comprises a stator 20, a rotor 22 arranged to rotate about a rotational axis 24 in relation to the stator 20, and a cooling system 26 for cooling at least a portion of the stator 20. An air gap 27 is formed between the stator 20 and the rotor 22.

The stator 20 comprises a stator core 28 and a stator coil 30, the stator coil 30 having a coil end winding 32 extending axially beyond the stator core 28. The stator coil 30 may include one or more stator windings. The one or more stator windings may include one or more coil end windings 32.

The rotor 22 may include one or more permanent magnets. Thus, the electric rotating machine 4 may be a permanent magnet, PM, machine. According to alternative embodiments, the electric rotating machine 4 may be configured to operate according to other electrical operation schemes for electric rotating machines. For example, the rotor 22 may include one or more rotor windings. Conventional electrical operation schemes for electric rotating machines are known to the skilled person and are thus not discussed herein in further detail.

The rotor 22 is arranged in a rotor compartment 33. The rotor compartment 33 is formed in a housing 35 of the electric rotating machine 4. In the housing 35, also the stator 20 and the rotor 22 are arranged. The rotor 22 may be directly or indirectly journalled in the housing 35 e.g., via one or more ball bearings.

At least part of the coil end winding 32 is arranged in a channel 34 extending at least in part circumferentially around the rotational axis 24.

The cooling system 26 may be configured for cooling at least a portion of the stator 20 but may be configured for cooling the stator 20 in general. A coolant, such as oil or an oil mixture, may be directed through the cooling system 26 in order to cool at least the end winding 32. The cooling system 26 may include one or more channels, conduits, passages, and/or lines, for guiding the fluid to and from at least the coil end winding 32.

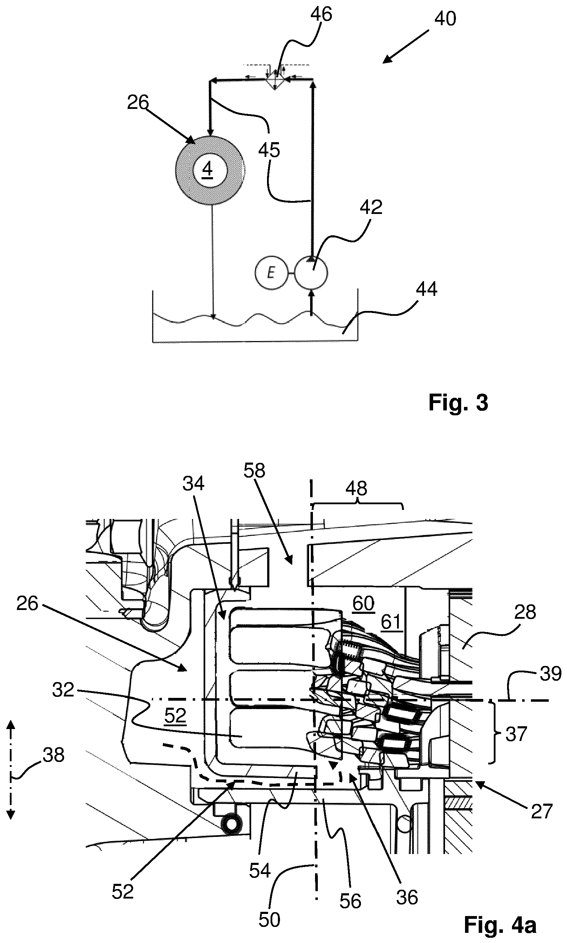

The cooling system 26 comprises the channel 34 and at least one inlet 36 to the channel 34 arranged at a radially inner portion of the channel 34 seen along a radial extension 38, see also **Figs. 4a** **and** **4b****.** The radial extension 38 extends perpendicularly to the rotational axis 24.

Thus, during use of the electric rotating machine 4, the coolant will be directed into the channel 34 at a radial position close to the air gap 27. Since this is a portion of the coil end winding 32 with high losses, it ensured that the coolant will efficiently cool the coil end winding 32.

**Fig. 3** schematically illustrates a cooling arrangement 40 according to embodiments. The cooling arrangement 40 is configured for cooling at least a portion of an electric rotating machine 4. The cooling arrangement 40 is presented as an example of an arrangement including the cooling system 26 discussed herein.

The cooling arrangement 44 comprises conduits 45. During operation of the cooling arrangement 40, a pump 42 is configured to pump coolant from a reservoir 44 via a heat exchanger 46 to the electric rotating machine 4 and back to the reservoir 44 via the conduits 45. The reservoir 44 forms a reservoir for coolant. In the heat exchanger 46, the coolant is cooled by a further fluid, such as ambient air or a water-based coolant.

In the electric rotating machine 4 the cooling arrangement 40 includes the cooling system 26 for cooling at least a coil end winding of a stator of the electric machine 4.

**Figs. 4a** **and** **4b** illustrate partial cross section through example embodiments of an electric rotating machine, such as the electric rotating machine 4 of **Fig. 2****.**

As mentioned above and as more clearly shown in **Figs. 4a** **and** **4b****,** the cooling system 26 comprises the channel 34 and the at least one inlet 36 to the channel 34 arranged at a radially inner portion 37 of the channel 34.

An axially extending line 39 indicates an example of a radial position within the channel 34, in relation to which radial position, the radially inner portion 37 of the channel 34 may be defined. The radially inner portion 37 is arranged radially inside the line 39. The radially inner portion 37 may be a radially inner quarter of the channel 34, or a radially inner third of the channel 34, or a radially inner half of the channel 34.

In the embodiments of **Fig. 4a****,** the at least one inlet 36 to the channel 34 is arranged at a radially inner side of the channel 34. That is, the inlet 36 extends into the channel 34 from a position radially inside the channel 34. Put differently, the at least one inlet 36 is arranged along an inner circumference of the channel 34.

In the embodiments of **Fig. 4b****,** the at least one inlet 36 to the channel 34 is arranged at an axial side of the channel 34. That is, the inlet 36 extends into the channel 34 from a position axially outside the channel 34. Put differently, the at least one inlet 36 is arranged along an axial circumference of the channel 34.

In both the embodiments of **Figs. 4a** **and** **4b****,** the at least one inlet 36 to the channel 34 is arranged at the radially inner portion 37 of the channel 34.

In the embodiments of **Fig. 4a****,** the at least one inlet 36 to the channel 34 may be arranged at an axial half 48 of the channel 34 closest to the stator core 28.

Thus, during use of the electric machine 4, the coolant may be directed into a portion of the channel 34 closest to the air gap 27. Accordingly, an efficient cooling of the end winding 32 may be ensured.

In **Fig. 4a** a line 50 indicates an axial centreline of the channel 34, in relation to which the axial half 48 of the channel 34 closest to the stator core 28 may be defined.

With reference to **Figs 4a** **and** **4b****,** the cooling system 26 may comprise one or more passages 52 arranged upstream of the channel 34. The at least one inlet 36 to the channel 34 may be fluidly connected to the one or more passages 52.

According to some embodiments, the one or more passages 52 may be arranged at least partially along the channel 34. In this manner, the one or more passages 52 may be arranged e.g., radially inside the channel 34 for directing the coolant to the at least one inlet 36 close to the stator core 28, as in the **Fig. 4a** embodiments, and/or at an axial portion of the channel 34, as differently exemplified in the embodiments of **Figs. 4a** **and** **4b****.**

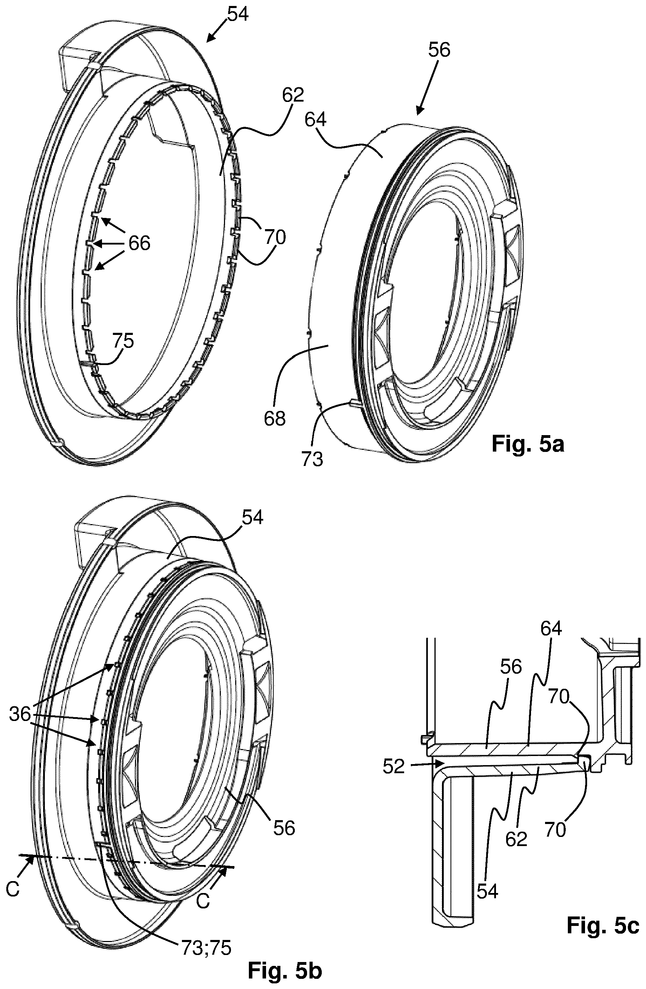

According to some embodiments, the one or more passages 52 may be formed between a first guiding member 54 and a second guiding member 56. The channel 34 may be partially delimited by the first guiding member 54. In this manner, the one or more passages 52 may be provided in a convenient manner radially inside the channel 34 in the electric machine, see **Fig. 4a****.** See further below with reference to **Figs. 5a - 5f****.**

In **Figs. 4a** **and** **4b****,** a flow path of the coolant through the one or more passages 52 and the at least one inlet 36 during use of the electric machine is indicated with a broken line arrow.

With reference to **Figs. 4a** **and** **4b****,** the cooling system 26 may comprise at least one outlet 58 from the channel 34 arranged at a radially outer portion of the channel 34 seen along the radial extension 38. Thus, the coolant may flow generally radially outwardly through the channel 34 i.e., generally from a warmest region of the end winding 32 towards a coolest region thereof.

The at least one outlet 58 may be arranged at an upper portion of the channel 34, seen with the electric rotating machine 4 positioned in a use position thereof i.e., as shown in **Figs. 2****,** **4a****, and** **4b****.** In this manner, gravity may assist in filling the channel 34 with coolant as the coolant has to be pumped through the channel 34 against the force of gravity to reach the at least one outlet 58.

For instance, the pump 42 of the cooling arrangement 40 discussed with reference to **Fig. 3** may be configured for pumping coolant through the channel 34 e.g., against the force of gravity.

The use position is a position in which the electric machine is mounted in e.g., a vehicle and with the vehicle standing one a surface to be travelled by the vehicle.

The coil end winding 32 may be arranged at the radially inner portion 37 of the channel 34. This means that the end winding 32 may be arranged in the radially inner portion 37 of the channel 34 but also may extend radially outside the radially inner portion 37 of the channel 34.

The channel 34 may extend radially outside the coil end winding 32. Thereby an unblocked portion 60 of the channel 34 may be formed radially outside of the coil end winding 32 seen along the radial extension 38. The unblocked portion 60 may extend at least partially circumferentially around the coil end winding 32. Accordingly, the unblocked portion 60 may form an at least partially circumferential flow path 61 in the channel 34.

Thus, there may be provided an at least partially circumferential flow path 61 to the outlet 58 radially outside the end winding. The coolant that has passed through the coil end winding 32 accordingly, may flow with a lower flow resistance in the unblocked portion 60 than within the coil end winding 32 to the at least one outlet 58.

There may be provided more than one outlet 58 for the coolant. Accordingly, either a fully circumferential flow path 61 has more than one outlet or a number of partially circumferential flow paths 61 have one or more outlets each.

**Figs. 5a - 5c** illustrate first and second guiding members 54, 56 configured for forming one or more passages 52 in a cooling system. The cooling system may be a cooling system 26 as discussed above with reference to **Figs. 2** - **4a****.**

In **Fig. 5a****,** the first and second guiding members 54, 56 are shown separated from each other. That is, in a manner as before assembly of the first and second guiding members 54, 56 to form the passage 52. In **Fig. 5b****,** the first and second guiding members 54, 56 are shown assembled to form the passage 52. **Fig. 5c** shows a cross section along line C - C in **Fig. 5b****.** In the following reference is made to **Figs. 5a - 5c****.**

In the cooling system, the channel 34 may border to the first guiding member 54, see **Fig. 4a****.**

Between the first and second guiding members 54, 56, there are formed one or more passages 52. The first and second guiding members 54, 56 comprise ring-shaped wall members 62, 64 to form therebetween the one or more passages 52. The one or more passages 52 may be ring-shaped or partially ring-shaped, such as arc-shaped.

The at least one inlet 36 to the channel is fluidly connected to the one or more passages 52 and to the channel when the first and second guiding members 54, 56 are arranged in an electric rotating machine.

In the illustrated embodiments, the at least one inlet 36 to the channel comprise more than one inlet 36. The inlets 36 are distributed along a circumference of the first guiding member 54. This means that when the first and second guiding members 54, 56 are arranged in the electric machine, the inlets 36 are arranged along an inner circumference of the channel. Hence, during operation of the electric machine, to cool the coil end winding, the coolant is introduced in more than one circumferential position of the channel and accordingly, to more than one circumferential position of the coil end winding.

According to example embodiments, the at least one inlet 36 to the channel may comprise within a range of 2 - 50 inlets 36 distributed along a circumference of the channel.

The at least one inlet 36 to the channel may be formed by one or more recesses 66 and/or through holes in the first guiding member 54.

In the illustrated embodiments, the first guiding member 54 is provided with a number of recesses 66, see e.g. **Fig. 5a****.** A flange 68 of the second guiding member 56 is positioned against the first guiding member 54 at the recesses 66. Accordingly, through openings are formed, which through openings extend from the one or more passages 52 to the channel when the first and second guiding members 54, 56 are arranged in the electric machine. The through openings form the inlets 36.

The first and second guiding members 54, 56 may be connected to each other via a snap-fit connection. For this purpose, one or both of the ring-shaped wall members 62, 64 of the first and second guiding members 54, 56 may be provided with protrusions 70. The protrusions 70 of the respective wall members 62, 64 engage with each other when the first and second guiding members 54, 56 are assembled. Alternatively, one of the ring-shaped wall members 62, 64 may be provided with protrusions and the other the ring-shaped wall members 62, 64 may be provided with recesses. The protrusions of one of ring-shaped wall members 62, 64 engage with the recesses of the other of the ring-shaped wall member 62, 64 when the first and second guiding members 54, 56 are assembled.

The first and second guiding members 54, 56 may be rotationally locked in relation to each other. For instance, at axially extending, and each other facing, surfaces of the ring-shaped wall members 62, 64 may engage with each other to prevent the first and second guiding members 54, 56 from rotating in relation to each other.

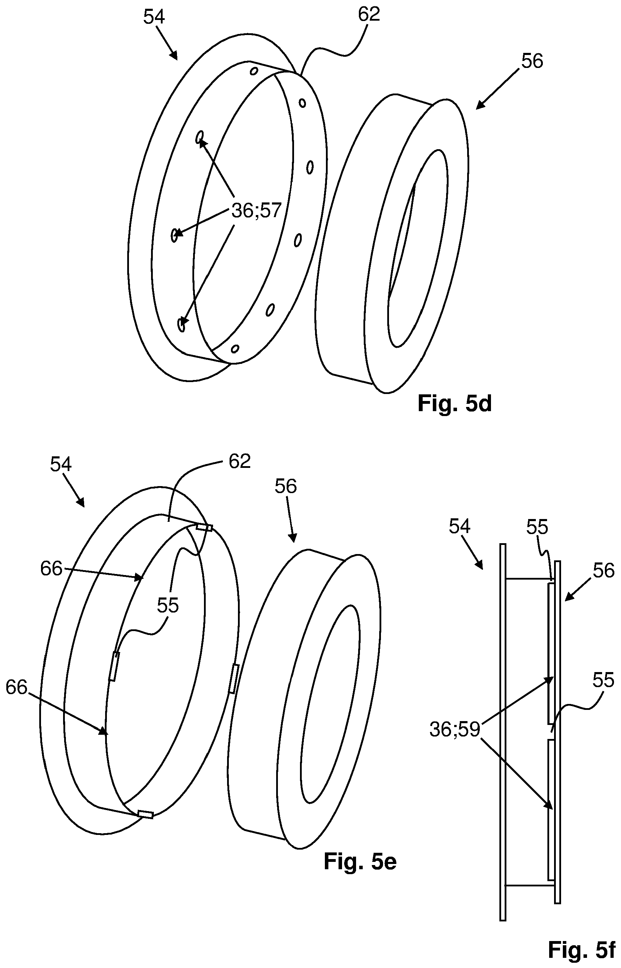

**Figs. 5d - 5f** illustrate alternative embodiments of first and second guiding members 54, 56 configured for forming one or more passages in a cooling system. The cooling system may be a cooling system 26 as discussed above with reference to **Figs. 2** - **4a****.**

These embodiments resemble in much the embodiments of **Figs. 5a - 5c****.** Accordingly, in the following mainly the differentiating features will be discussed.

In **Fig. 5d****,** the first and second guiding members 54, 56 are shown separated from each other.

In these embodiments, the at least one inlet 36 is formed by one or more through holes 57. The through holes 57 extend through the ring-shaped wall member 62 of the first guiding member 54.

One or more of the through holes 57 may be arranged in an axial midportion of the ring-shaped wall member 62, as shown in **Fig. 5d****.** Alternatively, one or more of the through holes 57 may be arranged axially towards the air gap between the stator and rotor and/or axially remote from the air gap.

In the embodiments of **Figs. 5e and 5f****,** the at least one inlet 36 is formed by four slot-shaped openings 59 formed between the first and second guiding members 54, 56. In **Fig. 5e****,** again, the first and second guiding members 54, 56 are shown separated from each other. In **Fig. 5f****,** the first and second guiding members 54, 56 are shown assembled to form the passage.

The ring-shaped wall member 62 of the first guiding member 54 is provided with long recesses 66 between protrusions 55. The protrusions 55 abut against the second guiding member 56 to provide the distance between the first and second guiding members 54, 56 that allows the recesses 66 to form the slot-shaped openings 59.

The number of slot-shaped openings 59 may be different than four, such as less than four or more than four.

**Fig. 6** illustrates embodiments of a method 100 for cooling a coil end winding of an electric rotating machine. The electric rotating machine may be an electric rotating machine 4 as discussed above with reference to **Figs. 2 - 5c****.** Accordingly, in the following reference is also made to **Figs. 2 - 5c****.**

Accordingly, the electric machine 4 comprises a stator 20, a rotor 22 arranged to rotate about a rotational axis 24 in relation to the stator 20, and a cooling system 26 for cooling at least the coil end winding 32. The stator 20 comprises a stator core 28 and a stator coil 30, the stator coil 30 comprising the coil end winding 32 which extends axially beyond the stator core 28. At least part of the coil end winding 32 is arranged in a channel 34 extending at least partially around the rotational axis 24 The cooling system 26 comprises the channel 34.

The method 100 comprises steps of:
- supplying 102 a coolant to the channel 34 at a radially inner portion of the channel 34, and
- directing 104 the coolant radially outwardly through the coil end winding 32.

According to embodiments, the step of supplying 102 a coolant may comprise a step of:
- supplying 106 the coolant via more than one inlet 36 to the channel 34 at the radially inner portion of the channel 34. In this manner, the coolant may be supplied to the end winding in more than one circumferential position of the channel. Thus, cooling of the coil end winding may be further improved.

According to embodiments, the method 100 may comprise, subsequently to the step of directing 104 the coolant, a step of:
- guiding 108 the coolant along an at least partially circumferential flow path 61 in the channel 34 radially outside the coil end winding 32 to at least one outlet 58 from the channel 34. In this manner, after the coolant as flowed through the coil end winding 32, the coolant may be conducted with low flow resistance along the at least partially circumferential flow path 61 to the at least one outlet 58. The at least partially circumferential flow path 61 may be formed by an unblocked portion 60 of the channel 34 as discussed above with reference to **Fig. 4****.**

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. An electric rotating machine (4), comprising a stator (20), a rotor (22) arranged to rotate about a rotational axis (24) in relation to the stator (20), and a cooling system (26) for cooling at least a portion of the stator (20), wherein
a radial extension (38) extends perpendicularly to the rotational axis (24), wherein
the stator (20) comprises a stator core (28) and a stator coil (30), the stator coil (30) having a coil end winding (32) extending axially beyond the stator core (28), wherein
at least part of the coil end winding (32) is arranged in a channel (34) extending at least partially around the rotational axis (24), and wherein
the cooling system (26) comprises the channel (34) and at least one inlet (36) to the channel (34) arranged at a radially inner portion (37) of the channel (34) seen along the radial extension (38), wherein the cooling system (26) comprises one or more passages (52) arranged upstream of the channel (34), wherein upstream the channel is before the channel seen along a flow direction of the coolant in the cooling system, and wherein the at least one inlet (36) to the channel (34) is fluidly connected to the one or more passages (52),
**characterized in that** the one or more passages (52) is/are formed between a first guiding member (54) and a second guiding member (56),
wherein the first and second guiding members (54, 56) comprise ring-shaped wall members (62, 64) to form therebetween the one or more passages (52) and wherein the channel (34) is partially delimited by the first guiding member (54),
wherein the at least one inlet (36) to the channel (34) is formed by one or more recesses or through holes in the first guiding member (54).

2. The electric rotating machine (4) according to claim 1, wherein the at least one inlet (36) to the channel (34) is arranged at an axial half (48) of the channel (34) closest to the stator core (28), wherein a line 50 indicates an axial centreline of the channel (34), in relation to which the axial half (48) of the channel (34) closest to the stator core (28) may be defined.

3. The electric rotating machine (4) according to claim 1 or 2, wherein the at least one inlet (36) to the channel (34) comprises more than one inlet (36) distributed along a circumference of the channel (34).

4. The electric rotating machine (4) according to any one of the preceding claims, wherein the at least one inlet (36) to the channel (34) comprises within a range of 2 - 50 inlets (36) distributed along a circumference of the channel (34).

5. The electric rotating machine (4) according to any one of the preceding claims, wherein the cooling system (26) comprises at least one outlet (58) from the channel (34) arranged at a radially outer portion of the channel (34) seen along the radial extension (38).

6. The electric rotating machine (4) according to claim 5, wherein the at least one outlet (58) is arranged at an upper portion of the channel (34), seen with the electric rotating machine (4) positioned in a use position thereof, wherein the use position is a position in which the electric machine (4) is mounted in a vehicle .

7. The electric rotating machine (4) according to any one of the preceding claims, wherein the coil end winding (32) is arranged at the radially inner portion (37) of the channel (34), and wherein the channel (34) extends radially outside the coil end winding (32), forming in the channel (34) an unblocked portion (60) of the channel (34) radially outside of the coil end winding (32) seen along the radial extension (38), the unblocked portion (60) extending at least partially circumferentially around the coil end winding (32).

8. A method (100) for cooling a coil end winding (32) of an electric rotating machine (4) according to claim 1, and wherein
the method comprising steps of:
- supplying (102) a coolant to the channel (34) at a radially inner portion (37) of the channel (34), and
- directing (104) the coolant radially outwardly through the coil end winding (32).

9. The method (100) according to claim 8, wherein the step of supplying (102) a coolant comprises a step of:
- supplying (106) the coolant via more than one inlet (36) to the channel (34) at the radially inner portion (37) of the channel (34).

10. The method according to claim 8 or 9, comprising subsequently to the step of directing (104) the coolant a step of:
- guiding (108) the coolant along an at least partially circumferential flow path (61) in the channel (34) radially outside the coil end winding (32) to at least one outlet (58) from the channel (34).

11. A vehicle (2) comprising one or more electric rotating machines (4) according to any one of claims 1 - 7.

## Patentansprüche

1. Elektrische, rotierende Maschine (4), umfassend einen Stator (20) und einen Rotor (22), der dazu angeordnet ist, sich um eine Drehachse (24) relativ zu dem Stator (20) zu drehen und ein Kühlsystem (26), um wenigstens einen Abschnitt des Stators (20) zu kühlen, wobei
sich ein radialer Fortsatz (38) senkrecht zu der Drehachse (24) erstreckt, wobei
der Stator (20) einen Statorkern (28) und eine Statorspule (30) umfasst, wobei die Statorspule (30) eine Spulenendwicklung (32) aufweist, die sich axial über den Statorkern (28) hinaus erstreckt, wobei
wenigstens ein Teil der Spulenendwicklung (32) in einem Kanal (34) angeordnet ist, der sich wenigstens teilweise um die Drehachse (24) erstreckt und wobei
das Kühlsystem (26) den Kanal (34) und wenigstens einen Einlass (36) in den Kanal (34) umfasst, der an dem radial innenliegenden Abschnitt (37) des Kanals (34) angeordnet ist, der entlang dem radialen Fortsatz (38) zu sehen ist, wobei das Kühlsystem (26) einen oder mehrere Durchgänge (52) umfasst, die stromaufwärts des Kanals (34) angeordnet sind, wobei sich der Kanal stromaufwärts vor dem Kanal befindet, der in Flussrichtung des Kühlmittels des Kühlsystems zu sehen ist und wobei der wenigstens eine Einlass (36) des Kanals (34) fluidisch mit einem oder mehreren Durchgängen (52) verbunden ist,
**dadurch gekennzeichnet, dass** eine oder mehrere Durchgänge (52) zwischen einem ersten Führungselement (54) und einem zweiten Führungselement (56) gebildet werden,
wobei das erste und zweite Führungselement (54, 56) ringförmige Wandelemente (62, 64) umfassen, die zwischen dem einen oder mehreren Durchgängen (52) gebildet werden und wobei der Kanal (34) teilweise von dem ersten Führungselement (54) begrenzt wird,
wobei der wenigstens eine Einlass (36) in den Kanal (34) von einem oder mehreren Aussparungen oder Durchgangsbohrung in dem ersten Führungselement (54) gebildet wird.

2. Elektrische, rotierende Maschine (4) nach Anspruch 1, wobei der wenigstens eine Einlass (36) in den Kanal (34) an einer axialen Hälfte (48) des Kanals (34), der sich am nächsten zu dem Statorkern (28) befindet, angeordnet ist, wobei eine Linie 50 eine axiale Mittellinie des Kanals (34) andeutet, zu der die axiale Hälfte (48) des Kanals (34), die sich am nächsten zu dem Statorkern (28) befindet, in Relation definiert werden kann.

3. Elektrische, rotierende Maschine (4) nach Anspruch 1 oder 2, wobei der wenigstens eine Einlass (36) in den Kanal (34) mehr als einen entlang eines Umfangs des Kanals (34) angeordnet Einlass (36) umfasst.

4. Elektrische, rotierende Maschine (4) nach einem der vorangehenden Ansprüche, wobei der wenigstens eine Einlass (36) in den Kanal (34) 2 - 50 Einlässe (36) umfasst, die entlang eines Umfangs des Kanals (34) angeordnet sind.

5. Elektrische, rotierende Maschine (4) nach einem der vorangehenden Ansprüche, wobei das Kühlsystem (26) wenigstens einen Auslass (58) aus dem Kanal (34) umfasst, der an einem radial außenliegenden Abschnitt des Kanals (34) angeordnet ist, der entlang des radialen Fortsatzes (38) zu sehen ist.

6. Elektrische, rotierende Maschine (4) nach Anspruch 5, wobei wenigstens ein Auslass (58) an einem oberen Abschnitt des Kanals (34) angeordnet ist, der zusammen mit der elektrischen, rotierenden Maschine (4) in einer Verwendungsposition positioniert ist, wobei die Verwendungsposition eine Position ist, in der die elektrische Maschine (4) in einem Fahrzeug montiert ist.

7. Elektrische, rotierende Maschine (4) nach einem der vorangehenden Ansprüche, wobei die Spulenendwicklung (32) an dem radial innenliegenden Abschnitt (37) des Kanals (34) angeordnet ist und wobei sich der Kanal (34) radial außerhalb der Spulenendwicklung (32) erstreckt, wobei sich ein freier Abschnitt (60) in dem Kanals (34) bildet, der sich radial außerhalb der Spulenendwicklung (32) befindet, die entlang dem radialen Fortsatz (38) zu sehen ist, wobei sich der freie Abschnitt (60) des Kanals (34) wenigstens teilweise in Umfangsrichtung um die Spulenendwicklung (32) erstreckt.

8. Verfahren (100) zur Kühlung einer Spulenendwicklung (32) einer elektrischen, rotierenden Maschine (4) nach Anspruch 1, und wobei
das Verfahren die folgenden Schritte umfasst:
- Versorgung (102) des Kanals (34) mit Kühlmittel an einem radial innenliegenden Abschnitt (37) des Kanals (34) und
- radial nach außen Leiten (104) des Kühlmittels durch die Spulenendwicklung (32).

9. Verfahren (100) nach Anspruch 8, wobei der Schritt des Versorgens (102) mit einem Kühlmittel einen folgenden Schritt umfasst:
- Versorgung (106) mit dem Kühlmittel über mehr als einen Einlass (36) zu dem Kanal (34) an dem radial innenliegenden Abschnitt (37) des Kanals (34).

10. Verfahren nach Anspruch 8 oder 9, nachfolgend umfassend den Schritt des Leitens (104) des Kühlmittels:
- Führung (108) des Kühlmittels entlang eines Strömungswegs (61), der wenigstens teilweise in Umfangsrichtung in dem Kanal (34) radial außerhalb der Spulenendwicklung (32) zu wenigstens einem Auslass (58) aus dem Kanal (34) verläuft.

11. Fahrzeug (2) umfassend eine oder mehrere elektrische, rotierende Maschine(n) (4) nach einem der Ansprüche 1 - 7.

## Revendications

1. Machine électrique tournante (4), comprenant un stator (20), un rotor (22) agencé pour tourner autour d'un axe de rotation (24) par rapport au stator (20), et un système de refroidissement (26) pour refroidir l'au moins une partie du stator (20), dans laquelle
une extension radiale (38) s'étend perpendiculairement à l'axe de rotation (24), dans laquelle
le stator (20) comprend un noyau de stator (28) et une bobine de stator (30), la bobine de stator (30) ayant un enroulement d'extrémité de bobine (32) s'étendant axialement au-delà du noyau de stator (28), dans laquelle
l'au moins une partie de l'enroulement d'extrémité de bobine (32) est agencée dans un canal (34) s'étendant au moins partiellement autour de l'axe de rotation (24), et dans laquelle
le système de refroidissement (26) comprend le canal (34) et l'au moins une entrée (36) vers le canal (34) agencée au niveau d'une partie radialement interne (37) du canal (34) vue le long de l'extension radiale (38), dans laquelle le système de refroidissement (26) comprend un ou plusieurs passages (52) agencés en amont du canal (34), dans laquelle, en amont, le canal se situe avant le canal vu le long d'une direction d'écoulement du liquide de refroidissement dans le système de refroidissement, et dans laquelle l'au moins une entrée (36) vers le canal (34) est en communication fluidique avec le ou les passages (52),
**caractérisée en ce que** le ou les passages (52) sont formés entre un premier élément de guidage (54) et un deuxième élément de guidage (56),
dans laquelle les premier et deuxième éléments de guidage (54, 56) comprennent des éléments de paroi de forme annulaire (62, 64) pour former entre eux le ou les passages (52) et dans lequel le canal (34) est partiellement délimité par le premier élément de guidage (54),
dans laquelle l'au moins une entrée (36) vers le canal (34) est formée par un ou plusieurs évidements ou trous traversants dans le premier élément de guidage (54).

2. Machine électrique tournante (4) selon la revendication 1, dans laquelle l'au moins une entrée (36) du canal (34) est agencée au niveau d'une moitié axiale (48) du canal (34) la plus proche du noyau de stator (28), dans laquelle une ligne 50 indique une ligne centrale axiale du canal (34), par rapport à laquelle la moitié axiale (48) du canal (34) la plus proche du noyau de stator (28) peut être définie.

3. Machine électrique tournante (4) selon la revendication 1 ou 2, dans laquelle l'au moins une entrée (36) vers le canal (34) comprend plus d'une entrée (36) répartie le long d'une circonférence du canal (34).

4. Machine électrique tournante (4) selon l'une quelconque des revendications précédentes, dans laquelle l'au moins une entrée (36) vers le canal (34) comprend, dans une plage de 2 à 50, des entrées (36) réparties le long d'une circonférence du canal (34).

5. Machine électrique tournante (4) selon l'une quelconque des revendications précédentes, dans laquelle le système de refroidissement (26) comprend au moins une sortie (58) du canal (34) agencée au niveau d'une partie radialement extérieure du canal (34) vue le long de l'extension radiale (38).

6. Machine électrique tournante (4) selon la revendication 5, dans laquelle l'au moins une sortie (58) est agencée au niveau d'une partie supérieure du canal (34), vue avec la machine électrique tournante (4) positionnée dans une position d'utilisation de celle-ci, dans laquelle la position d'utilisation est une position dans laquelle la machine électrique (4) est montée dans un véhicule.

7. Machine électrique tournante (4) selon l'une quelconque des revendications précédentes, dans laquelle l'enroulement d'extrémité de bobine (32) est agencé au niveau de la partie radialement interne (37) du canal (34), et dans laquelle le canal (34) s'étend radialement à l'extérieur de l'enroulement d'extrémité de bobine (32), formant dans le canal (34) une partie non bloquée (60) du canal (34) radialement à l'extérieur de l'enroulement d'extrémité de bobine (32) vue le long de l'extension radiale (38), la partie non bloquée (60) s'étendant au moins partiellement circonférentiellement autour de l'enroulement d'extrémité de bobine (32).

8. Procédé (100) pour refroidir un enroulement d'extrémité de bobine (32) d'une machine électrique tournante (4) selon la revendication 1, et dans lequel
le procédé comprenant les étapes de :
- l'alimentation (102) d'un liquide de refroidissement au canal (34) au niveau d'une partie radialement interne (37) du canal (34), et
- l'orientation (104) du liquide de refroidissement radialement vers l'extérieur à travers l'enroulement d'extrémité de bobine (32).

9. Procédé (100) selon la revendication 8, dans lequel l'étape consistant à fournir (102) un liquide de refroidissement comprend une étape de :
- l'alimentation (106) du liquide de refroidissement via plus d'une entrée (36) au canal (34) au niveau de la partie radialement interne (37) du canal (34).

10. Procédé selon la revendication 8 ou 9, comprenant, après l'étape consistant à diriger (104) le liquide de refroidissement, une étape de :
- guidage (108) du liquide de refroidissement le long d'un trajet d'écoulement au moins partiellement circonférentiel (61) dans le canal (34) radialement à l'extérieur de l'enroulement d'extrémité de bobine (32) vers l'au moins une sortie (58) du canal (34).

11. Un véhicule (2) comprenant une ou plusieurs machines tournantes électriques (4) selon l'une quelconque des revendications 1 à 7.
